# EUROPEAN PATENT APPLICATION

(11) **EP 4 793 781 A1**
(43) Date of publication of application: **19.08.2026**
(21) Application number: 25382141.7
(22) Date of filing: 18.02.2025
(51) Int. Cl.: G06F 12/1027

(54) **INSTRUCTION-AWARE METHOD FOR OPTIMIZING VIRTUAL-TO-PHYSICAL MEMORY ADDRESS TRANSLATION**

(71) Applicant: Barcelona Supercomputing Center - Centro Nacional de Supercomputación (BSC-CMS), 08034 Barcelona (ES)
(72) Inventor: CASAS GUIX, Marc, 08034 Barcelona (ES); CHASAPIS, Dimitrios, 08034 Barcelona (ES); VAVOULIOTIS, Georgios, 08034 Barcelona (ES)
(74) Representative: TRBL Intellectual Property

(57) **Abstract**

The present invention relates to a method corresponding to virtual-to-physical address translation replacement policies that differentiates between instruction and data memory accesses in order to act synergistically and reduce pipeline stalls, latency and energy consumption. More specifically, the proposed method promotes instruction translations to higher positions within a second translation list (STLB), making them less probable to be evicted. In combination, data translations maintenance is enhanced in a first list (L2C) which in turn contains the second list. This way, instruction translations are prioritized in the STLB and the associated increase in memory unit misses triggered by data page walks is mitigated.

## Description

### FIELD OF THE INVENTION

The present invention belongs to the technical field of memory management in computer systems. The invention relates to a method aimed at alleviating virtual to physical memory address translation overheads in page-based virtual memory computing systems and, more specifically, to a cooperative frequent last-level Translation lookaside buffer and cache replacement policies targeting workloads with large instruction footprints.

### BACKGROUND OF THE INVENTION

Virtual memory based on paging is prevalent in contemporary computing systems. Each memory access in a page-based virtual memory system requires translating a virtual address to a physical address and these mappings are usually stored in large page tables (PTs). Translation Lookaside Buffers (TLBs) mitigate address translation overheads by storing the recently used virtual-to-physical mappings. This way, when a memory access is requested, e.g., by a program in execution, the corresponding virtual-to-physical memory address mapping or translation if first searched for at the TLB. If it is found, there has been a TLB hit, and the corresponding mapping is sent to the program in execution. If it is not found, there has been a TLB miss, and the mapping is searched for in the corresponding page table -a process often dubbed as page walk or page table walk that consumes a considerably large number of resources and time- and inserted into the TLB for future consultation.

In this process, a reorganization of the TLB entries is performed. In case a hit takes place, the requested translation is promoted upwards in the TLB list, since it has been requested recently and was already available in the TLB. In the case a miss takes place, the translation inserted in the TLB from the page table is usually placed at the bottom of said list -or least recently used (LRU) position- and the translation that was placed at the LRU position before is eliminated or evicted so that the TLB does not change in length. It is to be noted that there might exist different level TLBs in order to speed up and optimize memory translation.

For these reasons, a fundamental aspect of TLB performance is its replacement policy. Processor vendors typically implement simple replacement approaches for the STLB based on Random or LRU policies. In addition, to improve TLB performance for address translation bound applications, previous work proposes predictive replacement policies for the TLB. Furthermore, recent literature shows that frequent last-level (typically second-level) TLB (STLB) misses incur significant performance and energy overheads. Prior work aimed at alleviating address translation overheads can be broadly classified in two categories: techniques that reduce the number of STLB misses and techniques that mitigate the latency of page walks.

Importantly, none of the previously proposed STLB replacement policies specifically targets reducing instruction STLB misses. Modern server and data centre applications are characterized not only by large datasets but also by large instruction footprints. These large footprints incur frequent cache and STLB misses due to instruction accesses, which are particularly problematic as they cause pipeline stalls and significantly harm performance. This problem is likely to be exacerbated in the near future since the instruction footprint of server applications increases yearly by up to 30%. To make matters worse, frequent STLB misses also increase pressure on the cache hierarchy since these misses trigger page walks that insert into the cache hierarchy memory blocks containing page table entries (PTEs).

Therefore, instruction STLB misses, which can potentially stall the pipeline, are more harmful for performance than data STLB misses whose latency can be partially hidden in out-of-order cores. While neglecting instruction STLB misses does not cause performance degradation for desktop or High-Performance Computing (HPC) workloads, which have small instruction footprints that typically fit in the first-level TLB, it leaves on the table many opportunities for improving the performance of big-code server workloads.

When it comes to replacement policies for the cache hierarchy, prior work is classified in two categories: translation oblivious replacement policies and translation-aware replacement policies. The fundamental difference between these two categories is that the latter differentiate their replacement decisions between cache blocks storing instruction/data payload and cache blocks storing Page Table Entries (PTEs). Prior translation-aware cache replacement policies have two issues: (i) they do not distinguish between cache blocks accommodating instruction PTEs and data PTEs and (ii) they do not work synergistically with the STLB replacement policy.

For these reasons, there is a need for STLB and cache replacement policies that differentiate between instruction and data memory accesses in order to act synergistically and reduce pipeline stalls, latency and energy consumption.

### BRIEF DESCRIPTION OF THE INVENTION

The present invention aims to overcome the above-mentioned limitations of the state of the art, by providing a method for cooperative STLB and cache replacement policies targeting workloads with large instruction footprints.

Hence, the present invention relates in a first aspect to a computer-implemented method for managing memory accesses in a page-based virtual memory system, wherein said system comprises:
- a first list comprising a plurality of ordered translations between virtual and physical memory addresses and zero, one or more memory blocks storing data payload; and
- a second list comprising a plurality of ordered translations between virtual and physical memory addresses, wherein the translations comprised in the second list are comprised in the first list.

Within this setup, the method comprises, generally, performing the following steps:
a) receiving, from a program in execution, a request for a translation between a virtual memory address and a physical memory address;
b) determining if the translation requested in step a) is comprised in the second list and
b1) sending, if the translation requested in step a) is comprised in the second list, the translation requested in step a) to the program in execution and advancing one or more places the position of said translation towards the top of the second list;
b2) eliminating, if the translation requested in step a) is not comprised in the second list, the translation placed at the bottom of the second list, sending the translation requested in step a) from the first list to the second list placing it at the bottom of said second list and sending said translation to the program in execution.

Advantageously in the invention, the method further comprises performing the following steps:
c) identifying if the request received in step a) corresponds to a data memory address translation or to an instruction memory address translation; and
d) if the request received in step a) corresponds to an instruction memory address translation, advancing one or more places the position of said translation towards the top of the second list.

The disclosed method allows for maximizing the number of instruction hits in the STLB at the expense of increasing data STLB misses. The goal of said method is, therefore, not to reduce the overall STLB misses per kilo instructions (MPKI) but selectively trade data translations for instruction translations to save critical for performance instruction page walks.

The method of the invention uses tailored insertion and promotion policies to favour keeping instruction translation PTEs at the top positions of the STLB recency stack, assuming that they follow a LRU policy without loss of generality, since vendors typically use an LRU variant as STLB replacement policy. The top of the LRU recency stack corresponds to the most recently used entry while the bottom position of this stack corresponds to the least recently used entry. These positions correspond, respectively to MRUₚₒₛ and LRUₚₒₛ. The proposed method uses the same eviction policy as LRU-based policies, i.e., it evicts the entry located at LRUₚₒₛ but uses insertion and promotion policies that consider whether STLB entries contain instruction or data translations, which is a fundamental difference from other STLB replacement policies like LRU or CHiRP.

In particular embodiments of the invention, the page-based virtual memory system further comprises a frequency counter adapted to encode the number of times that a translation has been previously requested, and step d) further comprises performing the following sub-steps:
d1) checking if the frequency counter is saturated to a predetermined value; and
d2) if the frequency counter is saturated, placing the translation requested in step a) at the top of the second list.

This allows for monitoring the frequency with which a translation is requested, so that the most required translations are placed at higher positions within the second list being, therefore, less likely to be evicted.

In particular embodiments of the invention, the first list corresponds to a page table partially or totally stored in a cache memory block and the second list corresponds to a frequent last-level Translation Lookaside Buffer (STLB), as this would be the typical structure found in page-based virtual memory systems.

In a second aspect, the invention relates to a computer implemented method for optimizing memory access in a page-based virtual memory system, the method comprising:
- performing a method according to any of the previously described embodiments; and
- if the translation requested in step a) is not comprised in the first list, performing the following steps:
   e) identifying the position within the first list of the translation, block of translations or memory block that is closer to the bottom of said first list and that does not comprise any data memory addresses;
   f) determining the distance from the bottom of the first list to the position identified in step e);
   f1) eliminating from the memory unit, if the distance determined in step f) is larger than a predefined value, the translation, block of translations or memory block placed at the bottom of the first list;
   f2) eliminating from the memory unit, if the distance determined in step f) is smaller than a predefined value, the translation, block of translations or memory block identified in step e); and
   g) inserting the translation requested in step a) into the first list placing it at the bottom of said first list.

This method corresponds to a replacement policy that amplifies the benefits of the previously described method. As mentioned, the method for managing memory accesses in a page-based virtual memory system prioritizes instruction entries over data entries with a notable increase in memory misses triggered by data page walks. The described method for optimizing memory access in a page-based virtual memory system effectively mitigates the performance impact of memory accesses triggered by page walks coming from data STLB misses. To do so, insertion and promotion policies follow a LRU approach with the modification that its eviction policy favours keeping cache blocks containing data PTEs in the memory hierarchy to accelerate data page walks and eventually reduce the overheads that increases data STLB misses.

On the other hand, and also advantageously in the invention, instead of performing a method for managing memory accesses in a page-based virtual memory system according to any of the previously described embodiments just once, it can be done continuously (i.e., performing steps a)-d) repeatedly according to the program/system requirements), and, additionally, a miss counter can be incremented in one unit every time that the translation requested in step a) is not comprised in the second list. In this way, if the miss counter reaches a predefined value and the translation requested in step a) is not comprised in the first list steps e)-g) are carried out.

In this way, phase adaptability is taken into account. Performing steps e)-g) is beneficial for performance during phases with high STLB pressure but it may harm performance for phases with low STLB pressure due to favouring data PTEs. The described embodiment allows for addressing this issue by providing a dynamic mechanism that enables steps e)-g) during phases with high STLB pressure while disabling them for workloads with moderate memory footprints that do not stress the TLB hierarchy.

In particular embodiments of the invention, the memory unit corresponds to a level 2 cache (L2C) and the first list corresponds to a page table, as this would be the typical structure found in page-based virtual memory systems.

In a third aspect, the invention relates to a system comprising computing means characterized in that said computing means comprise hardware and/or software means adapted to perform a method according to:
- any one of claims 1-3; and/or
- any one of claims 4-6.

Finally, in a fourth aspect, the invention relates to a computer program comprising instructions which, when the program is executed by computing means, cause the computing means to carry out a method according to:
- any one of claims 1-3; and/or
- any one of claims 4-6.

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

### DESCRIPTION OF THE DRAWINGS

The foregoing and other features and advantages will be more fully understood from the detailed description of the invention, as well as from examples referring to the attached figures, which are described in the following paragraphs, wherein:
Figure 1 shows a schematic representation of the steps of a computer-implemented method for managing memory accesses in a page-based virtual memory system according to an embodiment of the present invention.
Figure 2 shows a schematic representation of the steps of a computer implemented method for managing memory storage in a memory unit, said method being part of a computer implemented method for optimizing memory access in a page-based virtual memory system according to an embodiment of the present invention.
Figure 3 shows a schematic representation of the steps of a computer implemented method for optimizing memory access in a page-based virtual memory system according to an embodiment of the present invention.

### Numerical references used in the drawings

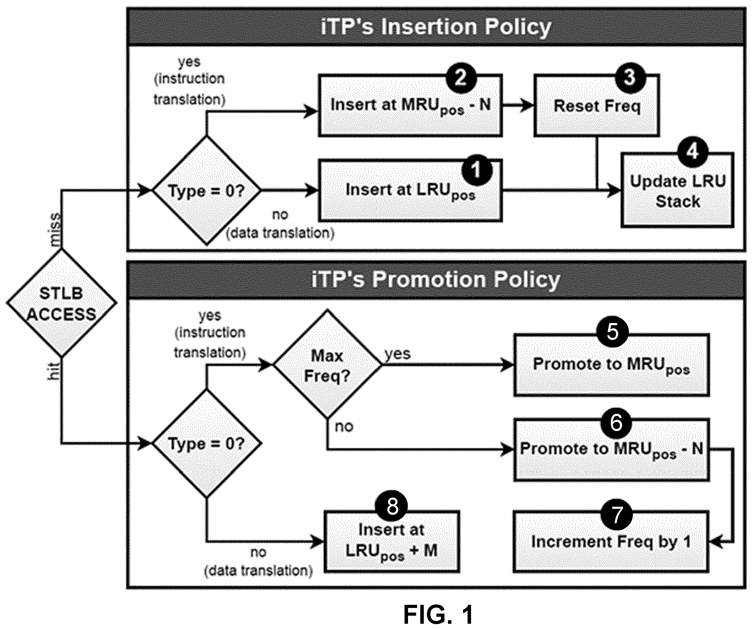

In order to provide a better understanding of the technical features of the invention, the referred Figures 1-3 are accompanied of a series of numerical references which, with an illustrative and non-limiting character, are hereby represented:

| | |
|---|---|
| 1 | Insert data translation at STLB LRUₚₒₛ |
| 2 | Insert instruction translation at STLB MRUₚₒₛ-N |
| 3 | Set Freq counter to 0 for new instruction translation entry |
| 4 | Update recency stack |
| 5 | Promote instruction translation to STLB MRUₚₒₛ-N if Freq is not saturated |
| 6 | Promote instruction translation to STLB MRUₚₒₛ if Freq is saturated |
| 7 | Increment Freq in 1 unit if it is not saturated |
| 8 | Promote data translation to STLB LRUₚₒₛ+M |
| 9 | Identify potential eviction victim at L2C bottom |
| 10 | Identify alternative eviction victim at L2C bottom not containing data translations |
| 11 | Determine final eviction victim |
| 12 | Return position of final victim within L2C |
| 13 | Apply iTP promotion policy and update Freq accordingly |
| 14 | Annotate type of miss |
| 15 | Store type bit in allocated L2C MSHR entry |
| 15' | Write back type' in corresponding block |
| 16 | Insert translation into STLB and type into STLB MSHR |
| 17 | Check threshold T1 |
| 18 | Enable xPTP |

### DETAILED DESCRIPTION OF THE INVENTION

The invention described herein refers to the accompanying drawings, which illustrate specific embodiments in which the present invention may be implemented. These embodiments will be described in detail sufficient to enable those skilled in the art to implement the present invention. It should be understood that various embodiments of the present invention are different from each other but need not be mutually exclusive. Accordingly, the detailed description to be described below is not intended to be taken in a limiting meaning, and the scope of the present invention, if properly described, is limited only by the appended claims, in addition to all scopes equivalent to those claimed by the appended claims. In the drawings, reference numerals refer to the same or similar functions over several aspects.

As disclosed in the preceding sections, the present invention overcomes the limitations of the prior art, by providing:
- a first computer-implemented method for managing memory accesses in a page-based virtual memory system;
- a second computer-implemented method for managing memory storage in a memory unit; and
- a third computer implemented method, resulting from the combination of the first and second methods, for optimizing memory access in a page-based virtual memory system. Advantageously, this third method is based on cooperative STLB and cache replacement policies that target workloads with large instruction footprints.

More specifically, these three policies or methods are briefly described as follows:
- First method - instruction Translation Prioritization (iTP): translation list replacement policy based on the facts that workloads with large instruction footprints incur large instruction translation overheads, and that smartly prioritizing instruction translations over data translations in the translation list has the potential to mitigate these costs.
- Second method - extended Page Table Prioritization (xPTP): a memory unit replacement policy that amplifies the benefits of iTP. xPTP is built on the observation that the translation list may incur an increase in memory unit misses triggered by data page walks when using an translation list replacement policy that prioritizes instruction entries over data entries like iTP. In this context, xPTP effectively reduces memory unit misses due to data page walk references and, therefore, maximizes the benefits of iTP.
- Third method - a combination of both iTP and xPTP (iTP+xPTP) exploiting their synergistical effect.

For simplicity, the abbreviated names iTP, xPTP and iTP+xPTP will be used in the following to refer to the first, second and third method, respectively. In turn, the first method corresponds to embodiments related to claims 1-3 and the third method corresponds to embodiments related to claims 4-6.

Also, without loss of generality, for the particular embodiments of the invention described in the following, STLB will be used as an example to refer to the second list as claimed, a page table partially or totally stored in a cache memory block will be used as an example to refer to the first list as claimed and a level 2 cache (L2C) will be used as an example to refer to the memory unit as claimed. It is to be noted that these are mere exemplifications used to describe a particular embodiment of the invention, whose scope spans beyond these specifications.

### Instruction Translation Prioritization (iTP)

The iTP method maximizes the number of instruction hits in the STLB at the expense of increasing data STLB misses. The goal of iTP is not to reduce the overall STLB misses per kilo instructions (MPKI) but selectively trade data translations for instruction translations to save critical resources for performance instruction page walks.

It uses specifically designed insertion and promotion policies to favour keeping instruction translation PTEs at the top positions of the STLB recency stack, assuming that they follow a LRU policy without loss of generality since vendors typically use an LRU variant as STLB replacement policy. The top of the LRU recency stack corresponds to the most recently used entry while the bottom position of this stack corresponds to the least recently used entry. These positions correspond, respectively to MRUₚₒₛ and LRUₚₒₛ. iTP uses the same eviction policy as LRU-based policies, i.e., it evicts the entry located at LRUₚₒₛ but uses insertion and promotion policies that consider whether STLB entries contain instruction or data translations. The implementation of iTP requires two additional metadata fields per STLB entry. The first field contains one bit, called Type, annotating whether an entry stores a data translation or an instruction translation. The second field contains a frequency counter, called Freq, that optimizes the insertion and promotion policies of iTP.

Figure 1 shows the insertion and promotion policies of iTP with a flowchart. The former takes place at the end of a page walk when the requested translation needs to be inserted in the STLB. The latter takes place upon STLB hits and moves the hit entry to the appropriate position in the recency stack. In the following these two policies are detailed according to the reference numbers in Figure 1.

iTP Insertion Policy: iTP inserts the new entry in the STLB by considering whether it contains a data or an instruction PTE. iTP inserts data translation entries (Type=1) at the LRUₚₒₛ position (1), thus this new entry has the highest priority for eviction. If it is an instruction translation entry, iTP inserts it at a high position in the recency stack, but not at the MRUₚₒₛ position. Instead, iTP places the new instruction entry N positions below MRUₚₒₛ in the recency stack (2). The rationale behind this decision is that the MRUₚₒₛ is reserved for instruction translation entries that are frequently referenced. An entry can only reach the MRUₚₒₛ position when its Freq counter is saturated. For new instruction translation entries, the Freq counter is set to 0 (3). Once the new entry is inserted, iTP updates the recency stack of all the other entries by moving them down one position. This update takes place for the insertion of both instruction and data translations (4). Thus, useless instruction translation entries can reach the LRUₚₒₛ if they are not frequently accessed and are eventually evicted from the STLB.

iTP Promotion Policy: iTP applies different promotion policies for entries containing data or instruction translations. If the hit entry contains an instruction translation (Type=0), iTP promotes it by considering the value of its Freq counter. If this counter is not saturated, iTP moves the hit entry to the same position as if it was a new instruction translation entry, i.e., MRUₚₒₛ -N (5). If the Freq counter is saturated, the entry is moved to MRUₚₒₛ (6). The

intuition behind this mechanism is that instruction translation entries that experience high access frequency rates are more likely to be useful in the future, thus iTP promotes them to the MRUₚₒₛ position. iTP increments the frequency of the hit entry if it is not saturated (7). If the entry that produced the hit contains a data translation, it is promoted M positions higher than LRUₚₒₛ (8). Within the definition of M and N it is established that they are both integers and that M is smaller than the STLB associativity and larger than N.

The proposed implementation of iTP requires 4 additional bits to be stored per STLB entry: one bit for the Type field and 3 bits for the Freq field. For a 1536-entry STLB like the one that many modern architectures employ, iTP requires 768 bytes of extra storage. iTP does not increase the STLB access latency with respect to LRU for STLBs with 1536 entries or more. Regarding smaller STLBs, iTP may increase the STLB access latency. Approaches keeping the Type and Freq counters in a small hardware structure decoupled from the STLB can reduce the STLB access latency at minimal energy overheads. Finally, iTP requires one additional bit per STLB Miss Status Holding Register (MSHR) entry to store the Type of the corresponding miss.

Having a 3-bit counter per STLB entry to store the Freq field constitutes a similar overhead as other well-established replacement approaches. For example, implementing a LRU replacement for a N-set associative cache would require N . log(N) bits per set. Since iTP requires 3 ·N bits per set, LRU incurs the same overhead or more than having 3 bits per entry when N ≥ 8. Tree-base pseudo-LRU policies require O(n) bits per set for a N-set associative cache, similar to iTP.

### Extended Page Table Prioritization (xPTP)

The xPTP has been designed as an L2C replacement policy that amplifies the benefits of iTP. The design of xPTP is motivated by the fact that when using a replacement policy that prioritizes instruction entries over data entries (e.g., iTP), there is a notable increase in cache misses triggered by data page walks. xPTP effectively mitigates the performance impact of memory accesses triggered by page walks coming from data STLB misses. To do so, xPTP requires an additional bit (called Type') per L2C block to indicate whether the block contains a data PTE or not. The insertion and promotion policies of xPTP follow a LRU approach. The only modification is that xPTP requires setting the Type' bit on insertion. The novel aspect of xPTP is its eviction policy that favours keeping cache blocks containing data PTEs in the cache hierarchy to accelerate data page walks and eventually reduce the overheads of iTP that increases data STLB misses.

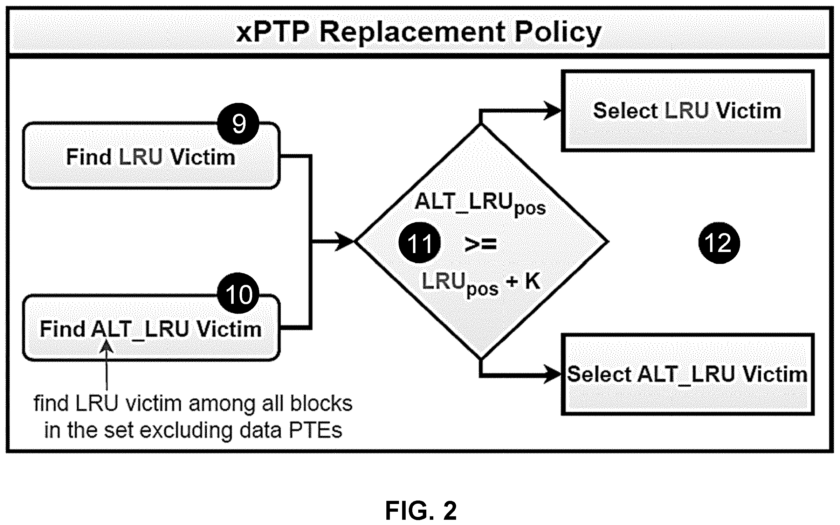

Figure 2 shows a flowchart representing the xPTP eviction policy upon an L2C miss. The initial step (9) identifies a potential victim block by looking at the bottom of the recency stack. In parallel, xPTP identifies an alternative victim which is the cache block closest to the recency stack not accommodating a data PTE (10). This position is referred to as ALT_VICTIMₚₒₛ. In the next step (11) it is determined which cache block will be evicted by evaluating the inequality ALT_VICTIMₚₒₛ ≥ LRUₚₒₛ +K, where K is an integer smaller than the cache associativity that indicates below which position in the recency stack an entry is considered to be a good candidate for eviction. The final step (12) returns the position of the victim: LRUₚₒₛ if the inequality holds or ALT_VICTIMₚₒₛ otherwise.

The implementation of xPTP requires one additional bit per L2C and L2C MSHR entry to store the Type' information, which constitutes a negligible area overhead.

### Combined policy (iTP+xPTP)

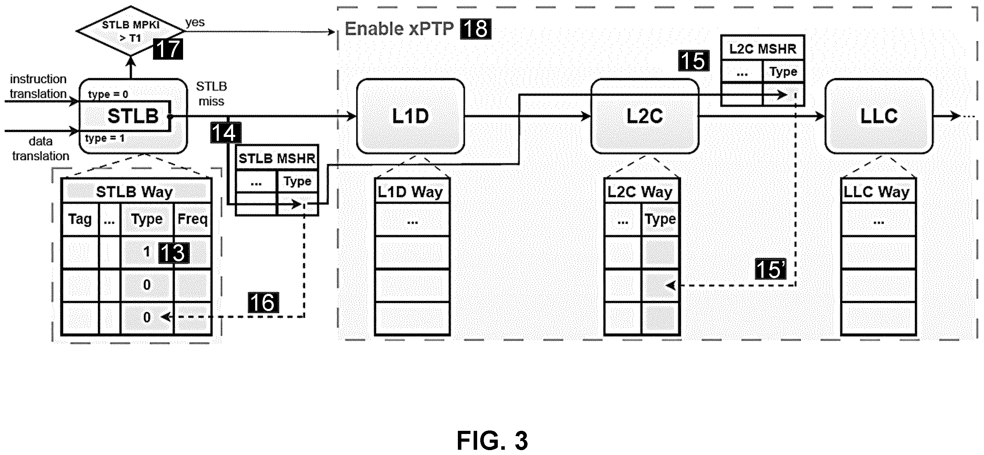

The combined policy iTP+xPTP, represents a cooperative scheme that uses iTP as STLB replacement policy and xPTP as L2C replacement policy. Figure 3 illustrates the operation of iTP+xPTP in steps and the microarchitectural modifications aimed to support its operation.

As mentioned, an address translation request can either correspond to an instruction fetch or a data access. The former/latter searches correspond to high level TLBs, i.e., the ITLB/DTLB, for the requested translation. Upon DTLB or ITLB misses, the STLB is looked up for possible hits. If the STLB access is a hit, iTP applies its promotion policy that takes into account the type of the hit entry to accordingly update the corresponding Freq value (13) and the processor replays the request. Upon STLB misses, an STLB MSHR entry is primarily allocated. iTP augments each STLB MSHR entry with one bit to annotate the Type of the miss (14): Type is 0/1 for instruction/data STLB misses. Then, the hardware page table walker is activated to fetch the requested translation (for either data or instruction) from the page table, potentially triggering multiple references to the memory hierarchy (L2C, LLC, DRAM). For each page walk reference that misses in the L2C, xPTP stores the Type' bit in the allocated L2C MSHR entry (15); Type' is set to 0/1 for page walk references serving instruction/data translation requests. Once a page walk reference that misses in the L2C is served (15'), the Type' bit is written back to the corresponding L2C block. The Type' bit is set to one for blocks accommodating data address translation entries. Following this operation, xPTP leverages the Type' bit in the L2C to drive its replacement decisions, as explained before. Finally, at the end of the page walk, the requested translation needs to be inserted into the STLB coupled with the corresponding Type bit that is stored in the STLB MSHR (16). At this point, iTP takes as input the Type bit to drive the insertion of the new entry.

In another implementation of the combined method of the invention, phase adaptability is taken into account. xPTP is beneficial for performance during phases with high STLB pressure but it may harm performance for phases with low STLB pressure due to favouring data PTEs in the L2C. To address this issue, iTP+xPTP is provided with a dynamic mechanism that enables xPTP during phases with high STLB pressure while disabling xPTP for workloads with moderate memory footprints that do not stress the TLB hierarchy.

A mechanism that monitors the STLB MPKI rates is implemented such that if the STLB MPKI surpasses a threshold (17), T1, it enables xPTP (18). Otherwise, standard LRU policy is used for the current access. This selection scheme can be implemented with two counters and a 1-bit status register. The first counter accounts for the STLB misses, the second counter accounts for the number of dynamic instructions executed, and the 1-bit status register specifies which cache replacement policy is used for the L2C, either xPTP or LRU. Initially, the two counters are set to zero. Once the counter counting the executed dynamic instructions reaches 1000 or other predetermined value, the misses counter is compared to T1, and the 1-bit status register shifts to xPTP if the miss count exceeds T1. If it does, xPTP is enabled. Then, both counters are set to zero and the process starts again.

## Claims

1. Computer-implemented method for managing memory accesses in a page-based virtual memory system, wherein said system comprises:
- a first list comprising a plurality of ordered translations between virtual and physical memory addresses and one or more memory blocks storing data payload; and
- a second list comprising a plurality of ordered translations between virtual and physical memory addresses, wherein the translations comprised in the second list are comprised in the first list;
wherein the method comprises performing the following steps:
a) receiving, from a program in execution, a request for a translation between a virtual memory address and a physical memory address;
b) determining if the translation requested in step a) is comprised in the second list and
b1) sending, if the translation requested in step a) is comprised in the second list, the translation requested in step a) to the program in execution and advancing one or more places the position of said translation towards the top of the second list;
b2) eliminating, if the translation requested in step a) is not comprised in the second list, the translation placed at the bottom of the second list, sending the translation requested in step a) from the first list to the second list placing it at the bottom of said second list and sending said translation to the program in execution; and
**characterised in that** the method further comprises performing the following steps:
c) identifying if the request received in step a) corresponds to a data memory address translation or to an instruction memory address translation; and
d) if the request received in step a) corresponds to an instruction memory address translation, advancing one or more places the position of said translation towards the top of the second list.

2. Computer implemented method according to claim 1, wherein the page-based virtual memory system further comprises a frequency counter adapted to encode the number of times that a translation has been previously requested, and wherein step d) further comprises performing the following sub-steps:
d1) checking if the frequency counter is saturated to a predetermined value; and
d2) if the frequency counter is saturated, placing the translation requested in step a) at the top of the second list.

3. Computer implemented method according to any one of claims 1 or 2, wherein:
- the first list corresponds to a page table partially or totally stored in a cache memory block; and
- the second list corresponds to a frequent last-level Translation Lookaside Buffer (STLB).

4. Computer implemented method for optimizing memory access in a page-based virtual memory system, the method comprising:
- performing a method according to any one of claims 1-3; and
- if the translation requested in step a) is not comprised in the first list, performing the following steps:
e) identifying the position within the first list of the translation, block of translations or memory block that is closer to the bottom of said first list and that does not comprise any data memory addresses;
f) determining the distance from the bottom of the first list to the position identified in step e);
f1) eliminating from the memory unit, if the distance determined in step f) is larger than a predefined value, the translation, block of translations or memory block placed at the bottom of the first list;
f2) eliminating from the memory unit, if the distance determined in step f) is smaller than a predefined value, the translation, block of translations or memory block identified in step e); and
g) inserting the translation requested in step a) into the first list placing it at the bottom of said first list.

5. Computer implemented method for optimizing memory access in a page-based virtual memory system, the method comprising:
- performing continuously a method according to any one of claims 1-3;
- incrementing a miss counter in one unit every time that the translation requested in step a) is not comprised in the second list;
- performing, if the miss counter reaches a predefined value and if the translation requested in step a) is not comprised in the first list, the following steps:
e) identifying the position within the first list of the translation, block of translations or memory block that is closer to the bottom of said first list and that does not comprise any data memory addresses;
f) determining the distance from the bottom of the first list to the position identified in step e);
f1) eliminating from the memory unit, if the distance determined in step f) is larger than a predefined value, the translation, block of translations or memory block placed at the bottom of the first list;
f2) eliminating from the memory unit, if the distance determined in step f) is smaller than a predefined value, the translation, block of translations or memory block identified in step e); and
g) inserting the translation requested in step a) into the first list placing it at the bottom of said first list.

6. Computer implemented method according to any one of claims 4-5, wherein:
- the memory unit corresponds to a level 2 cache (L2C); and
- the first list corresponds to a page table.

7. A system comprising computing means **characterized in that** said computing means comprise hardware and/or software means adapted to perform a method according to:
- any one of claims 1-3; and/or
- any one of claims 4-6.

8. Computer program comprising instructions which, when the program is executed by computing means, cause the computing means to carry out a method according to:
- any one of claims 1-3; and/or
- any one of claims 4-6.
